Europäisches Patentamt

European Patent Office

Office européen des brevets

(11) Numéro de publication : **0 357 468 B1**

(12) ## FASCICULE DE BREVET EUROPEEN

(45) Date de publication du fascicule du brevet :
10.03.93 Bulletin 93/10

(51) Int. Cl.⁵ : **H04N 3/15**

(21) Numéro de dépôt : **89401838.1**

(22) Date de dépôt : **27.06.89**

(54) **Matrice photosensible à deux diodes de même polarité et une capacité par point photosensible.**

(30) Priorité : **29.07.88 FR 8810265**

(43) Date de publication de la demande :
**07.03.90 Bulletin 90/10**

(45) Mention de la délivrance du brevet :
**10.03.93 Bulletin 93/10**

(84) Etats contractants désignés :
**DE FR GB NL**

(56) Documents cités :
**FR-A- 2 593 987**
**US-A- 4 200 892**

(73) Titulaire : **THOMSON-CSF**
**51, Esplanade du Général de Gaulle**
**F-92800 Puteaux (FR)**

(72) Inventeur : **Arques, Marc**
**THOMSON-CSF SCPI**
**F-92045 Paris la Défense Cédex 67 (FR)**

(74) Mandataire : **Guérin, Michel et al**
**THOMSON-CSF, SCPI, B.P. 329, 50, rue**
**Jean-Pierre Timbaud**
**F-92402 Courbevoie Cédexc (FR)**

EP 0 357 468 B1

## Description

L'invention concerne les matrices d'éléments photosensibles.

Pour réaliser des matrices d'éléments photosensibles, il est classique de prévoir un réseau de conducteurs en ligne, et un réseau de conducteurs en colonne, avec, à chaque croisement d'une ligne et d'une colonne, un élément photosensible respectif. Par le réseau de lignes on sélectionne une ligne d'éléments photosensibles dont on veut connaître les signaux électriques de sortie; par le réseau de conducteurs de colonnes, on lit un signal de sortie respectif pour chacun des éléments de la ligne sélectionnée.

Dans la demande de brevet français 86 00716 (FR-A-2593343 publié 24.07.87), on a décrit une matrice photosensible comportant un réseau de points photosensibles dans lequel chaque point photosensible comprend une capacité de stockage de charges en série avec un élément photosensible, l'ensemble étant connecté entre un conducteur de ligne et un conducteur de colonne; l'élément photosensible peut être une photodiode PIN à trois couches (couche semiconductrice de type P, couche intrinsèque I, couche de type N).

Des charges sont engendrées dans la photodiode par l'éclairement du point photosensible. Elles s'accumulent sur le noeud (flottant) entre la photodiode et la capacité. Elles sont lues par application au conducteur de ligne d'une impulsion de tension dans un sens qui polarise la photodiode en direct (alors qu'elle était polarisée en inverse pendant la phase d'accumulation). Des charges en quantité correspondant aux charges accumulées sont alors transférées du noeud flottant vers la colonne (ou inversement de la colonne vers le noeud flottant); la lecture consiste à mesurer ce mouvement de charges.

Après la fin de l'impulsion de lecture, la photodiode passe en polarisation inverse pour une nouvelle phase d'éclairement et d'intégration de charges.

Mais le potentiel du noeud flottant n'est plus à la valeur qu'il avait au début de la phase d'intégration; on ne peut donc pas comencer une nouvelle phase d'intégration sans établir à une valeur de départ bien déterminée ce potentiel du noeud flottant.

La phase de lecture est donc suivie d'une phase de remise à niveau du potentiel du noeud flottant.

La remise à niveau se fait par éclairement de la photodiode. Il est donc nécessaire de prévoir une source d'éclairement et des moyens de commande synchronisés avec les moyens de lecture de la matrice photosensible pour effectuer une remise à niveau après chaque phase de lecture.

Un but de la présente invention est de réaliser une matrice photosensible dans laquelle la capacité d'une colonne de points photosensibles soit aussi réduite que possible de manière à réduire le bruit de lecture lors du transfert de charges d'un point photosensible vers la colonne.

Un autre but de l'invention est de proposer une matrice qui soit technologiquement simple à réaliser.

Un autre but est de réduire les courants d'obscurité qui sont injectés sur la colonne par les points photosensibles de cette colonne même lorsque ces points ne sont pas éclairés.

Un autre but de l'invention est d'améliorer le rendement de collection des photocharges par les diodes photosensibles de la matrice.

Selon l'invention, on propose une matrice de points photosensibles comportant un réseau de points photosensibles agencés en lignes (au moins une ligne) et en colonnes (au moins une colonne), chaque point photosensible étant situé au carrefour d'une ligne et d'une colonne, caractérisé en ce que chaque point photosensible comprend deux diodes et une capacité reliées à un noeud flottant, la capacité étant reliée entre un conducteur de ligne et le noeud flottant, une première diode, dite diode de lecture, connectée entre le noeud flottant commun et un conducteur de colonne pour permettre le transfert entre ce conducteur de colonne et le noeud flottant d'une quantité de charges générées sur le noeud flottant par l'éclairement du point photosensible, et une deuxième diode, dite diode photosensible, connectée entre le noeud flottant et un conducteur relié à une source de tension de polarisation inverse, pour engendrer lorsqu 'elle est éclairée des charges électriques sur le noeud flottant, les diodes étant connectées avec la même polarité au noeud flottant.

Par l'expression "les diodes étant connectées avec la même polarité au noeud flottant", on entend que les diodes ont soit toutes les deux leur anode connectée au noeud flottant, soit toutes les deux leur cathode connectée au noeud flottant.

La source de tension de polarisation inverse est en principe une source de potentiel fixe. Elle maintient la photodiode en polarisation inverse en principe pendant tout le cycle d'intégration de charges et lecture.

Dans certains cas, on effectuera la lecture par application d'une impulsion de lecture sur une ligne, toutes les colonnes étant à un potentiel de référence; mais dans d'autres cas, on pourra appliquer sur une ligne une impulsion de lecture d'un signe par rapport au potentiel de référence des colonnes et simultanément une impulsion de lecture de signe opposé sur un conducteur de colonne spécifié relié au point photosensible dont on veut lire les charges, les autres conducteurs de colonne étant maintenus au potentiel de référence. Cette disposition permet de sélectionner facilement une colonne de points photosensibles.

Le fonctionnement du dispositif ne dépend pas du niveau de tension de polarisation du conducteur de ligne pendant la phase d'éclairement; il ne dépend que de l'amplitude et du signe de l'impulsion de lecture. On peut s'arranger pour choisir le niveau de tension de repos du conducteur de ligne de telle sorte que, aussi bien pendant la phase de lecture que pendant la phase d'éclairement, la tension aux bornes de la capacité reste toujours du même signe. Dans ces conditions, on peut réaliser la capacité sous forme d'une jonction de diode polarisée en inverse.

La diode de lecture aura une dimension beaucoup plus faible que la photodiode et par conséquent une capacité beaucoup plus réduite; il en résulte que la capacité globale vue du conducteur de colonne sera faible.

L'invention est applicable à toutes sortes de matrices photosensibles, y compris celles qui sont utilisées en radiologie et qui comportent de ce fait un scintillateur (oxyde de gadolinium, iodure de césium, etc.) pour convertir un rayonnement X (ou gamma, ou neutronique, etc.) en rayonnement lumineux dans la bande de longueurs d'onde auxquelles les photodiodes sont sensibles.

L'invention se prête particulièrement à une réalisation dans laquelle les points photosensibles sont réalisés par superposition de couches de silicium amorphe.

Parmi les avantages que l'on escompte de la présente invention, car ils sont essentiels pour la qualité des matrices réalisées, on peut mentionner:

- la faible capacité des colonnes de points photosensibles,
- la rapidité de la lecture,
- le bon découplage entre les points photosensibles de lignes ou colonnes voisines,
- la réduction de bruit parasite au moment de la lecture, bruit qui pouvait être généré dans les systèmes antérieurs par la mise en conduction directe de la diode photosensible; ici, la photodiode reste en principe polarisée en inverse, même pendant la lecture.

D'autres caractéristiques et avantages de l'invention apparaîtront à la lecture de la description détaillée qui suit et qui est faite en référence aux dessins annexés dans lesquels:

- la figure 1 représente une matrice de points photosensibles selon l'invention;
- la figure 2 représente le diagramme temporel de variation des potentiels sur le conducteur de ligne (diagramme 2a); un créneau temporel d'éclairement de la matrice (diagramme 2b); le diagramme de variation des potentiels sur le noeud commun flottant (diagramme 2c); et le courant circulant dans le conducteur de colonne (diagramme 2d).

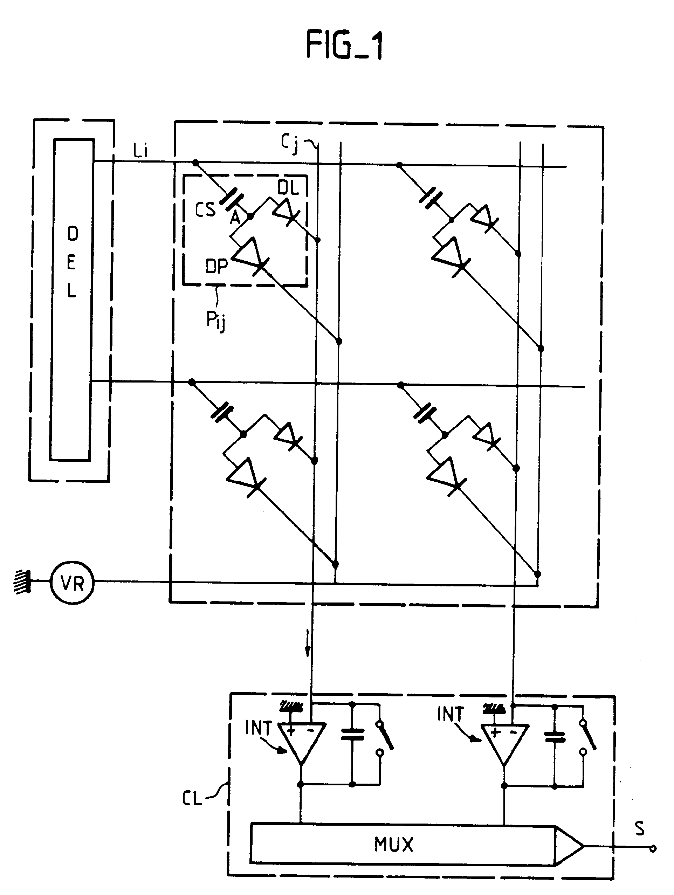

Sur la figure 1, on voit un schéma simplifié d'une matrice de points photosensibles selon la présente invention.

La matrice comprend un réseau de lignes et de colonnes de points photosensibles Pij.

Chaque ligne comprend un conducteur de ligne Li auxquel sont raccordés les points photosensibles de cette ligne; le conducteur de ligne Li sert à fournir une impulsion de tension de lecture des points de cette ligne. Les conducteurs de ligne sont connectés à un décodeur de ligne DEL apte à sélectionner une ligne déterminée dont on veut lire les points; le décodeur de ligne DEL autorise la transmission d'impulsions de lecture et de remise à niveau sur le conducteur Li de la ligne sélectionnée.

Chaque colonne comprend un conducteur de colonne Cj auquel sont raccordés les points photosensibles de cette colonne; le conducteur de colonne Cj est relié à un circuit CL de lecture des charges générées par le point photosensible Pij situé à l'intersection de cette colonne et de la ligne sélectionnée.

Le circuit de lecture lit les charges injectées sur la colonne par un pixel photosensible, tout en maintenant la colonne à un potentiel de référence déterminé (qui peut être le potentiel de masse).

Dans un exemple de réalisation, le circuit de lecture comprend un intégrateur INT pour chacune des colonnes de points, et un multiplexeur MUX recevant les sorties des intégrateurs pour fournir sur sa sortie S successivement des signaux représentant l'éclairement des points successifs de la ligne désignée.

Dans d'autres cas, le circuit de lecture pourrait être un circuit à transfert de charges et le multiplexeur pourrait être un registre à décalage à transfert de charges.

Selon l'invention, chaque point photosensible Pij comprend deux diodes et une capacité reliées à un noeud flottant commun A :

- DP (diode dont la caractéristique principale est d'être photosensible);
- DL (diode de lecture permettant le transfert de charges du noeud flottant A vers le conducteur de colonne Cj);
- CS (capacité de stockage des charges générées par l'éclairement).

La diode photosensible DP est connectée entre le noeud flottant A et une source de tension de polarisation établissant un potentiel constant VR tel que la photodiode reste polarisée en inverse pendant tout le cycle de fonctionnement; la diode de lecture DL est connectée entre le conducteur de colonne Cj et le noeud flottant A, et la capacité CS est connectée entre le conducteur de ligne Li et le noeud flottant.

Plus précisément, dans l'exemple de la figure 1, c'est l'anode de la diode photosensible DP et l'anode de la diode de lecture DL qui sont connectées au noeud flottant; mais on peut prévoir de manière équivalente, à condition d'inverser les sens relatifs des potentiels mis en jeu sur les conducteurs de ligne et de colonne, une inversion des anodes et cathodes des deux diodes à la fois; dans ce cas, on aurait la cathode de la diode photosensible et la cathode de la diode de lecture connectées au noeud flottant. Dans tous les cas, les diodes DP et DL ont une électrode de même type connectée au noeud flottant.

La diode DP est de surface relativement importante pour que sa sensibilité soit suffisante; la diode de lecture est beaucoup plus petite pour que sa capacité soit très faible devant celle de la diode DP et devant la valeur de la capacité CS, afin que la capacité globale de l'ensemble en série de la diode de lecture et la photodiode ou de la diode de lecture et la capacité CS soit très petite.

La capacité de la colonne de points sera d'autant plus faible (ce qui est avantageux) que la capacité de la diode de lecture sera faible, ce qui incite à prendre pour DL une diode de petites dimensions.

## FONCTIONNEMENT DU SCHEMA DE LA FIGURE 1

Pour simplifier les explications, on supposera que la capacité des diodes DL et DP est négligeable devant celle de la capacité de stockage CS; s'il n'en était pas ainsi, les valeurs numériques de potentiels et de variations de potentiel indiqués au cours des explications seraient modifiées, mais le principe de fonctionnement resterait valable.

On négligera aussi les chutes de potentiel dans les diodes lorsqu'elles sont polarisées en direct, alors que ces chutes sont de l'ordre de 0,5 volt.

Enfin, on supposera que le circuit de lecture connecté aux colonnes maintient le potentiel de celles-ci à une valeur de référence nulle.

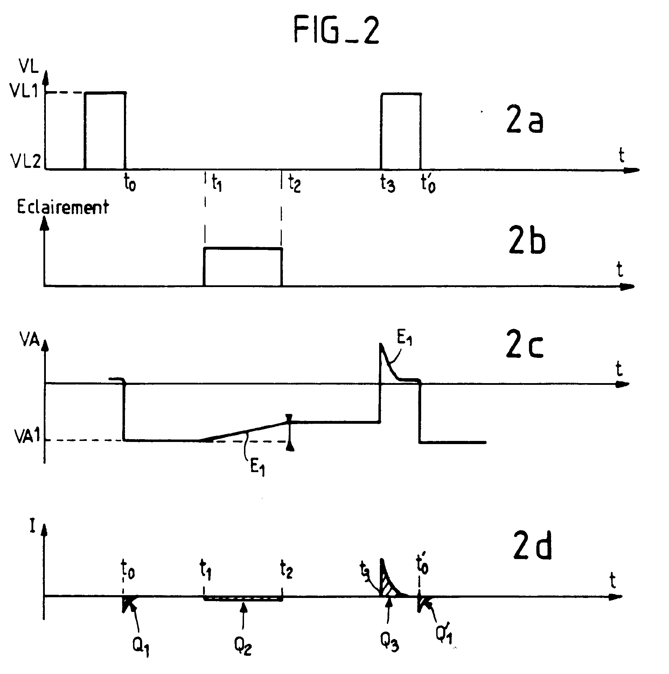

La figure 2 représente des diagrammes temporels permettant d'illustrer le fonctionnement.

Le diagramme 2a représente les impulsions de lecture appliquées à un conducteur de ligne; le diagramme 2b représente un créneau temporel pendant lequel la matrice photosensible est illuminée; le reste du temps elle est maintenue dans l'obscurité (fonctionnement par flashes d'éclairement); le diagramme 2c représente les variations de potentiel du noeud flottant A au cours d'un cycle d'illumination et lecture; le diagramma 2a représente le courant appliqué à un intégrateur de sortie en bout d'une colonne.

Le cycle de fonctionnement périodique dure entre un instant t0 définissant la fin d'une première impulsion de lecture et un instant t'0 définissant la fin de l'impulsion de lecture suivante.

Au départ, juste avant l'instant t0, l'état initial est le suivant :

- le potentiel VL sur le conducteur de ligne Li a une valeur VL1 positive, par exemple +4 volts; cette valeur est la valeur imposée pendant une impulsion de lecture, l'état initial étant celui qui existe au moment où se termine une impulsion de lecture;

- le potentiel VA sur le noeud A a une valeur pratiquement nulle (en réalité légèrement positive et égale à la chute de tension directe de la diode de lecture DL).

On verra que cet état initial est bien celui qui va exister à la fin du cycle de lecture qu'on va maintenant décrire.

Au temps t0, le conducteur de ligne Li de la ligne sélectionnée passe à un potentiel VL2 dit potentiel de repos ou potentiel de polarisation du conducteur de ligne, par exemple de 0 volt. On verra qu'il peut être différent de zéro.

Le potentiel du noeud A, initialement très proche de zéro, est tiré par influence capacitive à une valeur VA1 qui est proportionnelle à VL2 - VL1, le rapport de proportionalité étant $Cs/(Cs+Cdp+Cdl)$ où Cs, Cdp, Cdl sont les capacités respectives de la capacité CS, de la diode DP (polarisée en inverse) et de la diode DL (également polarisée en inverse).

$$VA1 = (VL2 - VL1)Cs/(Cs + Cdp + Cdl)$$

Une charge Q1 circule alors sur le conducteur de colonne relié au noeud flottant par la diode de lecture DL. Cette charge Q1 est le produit de la capacité Cdl de la diode de lecture par la variation de tension du noeud A (le conducteur de colonne ayant une tension de référence dont on suppose qu'elle ne varie pas et qui est en principe zéro volt).

$$Q1 = (VL2 - VL1)Cdl.Cs/(Cs + Cdp + Cdl)$$

Cette charge est faible et s'écoule rapidement; le diagramme 2d qui représente le courant circulant dans le conducteur de colonne montre l'écoulement de la charge Q1 à partir de l'instant t0; la charge est l'intégrale du courant.

Le potentiel du noeud A reste ensuite à sa valeur VA1, les diodes DP et DL étant toutes deux polarisées en inverse et le noeud A restant donc flottant.

Entre un instant t1 et un instant t2, la matrice photosensible reçoit un éclairement; le reste du temps elle est en principe maintenue dans l'obscurité; toutefois, on verra que l'éclairement peut dans certains cas être continu de t0 à t'0.

L'éclairement provoque une génération de charges photoélecriques dans la photodiode; les charges positives s'accumulent sur le noeud flottant compte-tenu de la polarisation inverse de la photodiode DP; elles font monter le potentiel avec une pente d'autant plus importante que l'éclairement est plus important.

Il est à noter que si c'étaient les cathodes des diodes qui étaient connectées au noeud flottant, les sens des potentiels seraient inversés, et les charges négatives s'accumuleraient sur le noeud flottant; le potentiel du noeud A baisserait.

Au temps t2, instant où se termine l'éclairement, le potentiel VA du noeud A a atteint une valeur intermédiaire entre son potentiel de départ VA1 et le potentiel de référence des colonnes; il ne peut pas monter plus haut, sans quoi la diode de lecture deviendrait conductrice et les charges supplémentaires s'évacueraient dans la colonne.

Si la quantité de charges générées par la photodiode est QD, une charge $Q2 = QD.Cdl/(Cs+Cdp+Cdl)$ circule sur la colonne Cj entre les instants t1 et t2, mais cette charge est faible compte-tenu de la faible valeur de la capacité Cdl par rapport à Cs et Cdp; de plus, cette charge est étalée dans le temps sur la durée t1, t2.

Après interruption de l'illumination, le potentiel reste constant, les diodes DP et DL étant polarisées en inverse.

Au temps t3 on applique une impulsion de lecture qui va durer jusqu'à la fin du cycle, c'est-à-dire jusqu'au temps t'0.

L'impulsion de lecture consiste à porter le potentiel de ligne de la valeur de repos VL2 jusqu'à la valeur VL1.

Le potentiel du noeud A passe d'une valeur VA (atteinte à l'instant t2 et dépendant de l'éclairement reçu par le point photosensible entre t1 et t2) à une valeur VA + (VL2-VL1)Cs/(Cs+Cdp+Cdl), c'est-à-dire peu différent de VA + VL2 - VL1. Pendant cette montée, une charge Q'3 égale à -Q1 (on rappelle que Q1 est la charge circulant immédiatement après t0) circule dans le conducteur de colonne.

La nouvelle valeur du potentiel du noeud A est positive ou nulle et rend condutrice la diode de lecture DL connectée au potentiel de référence nul de la colonne Cj.

Les charges accumulées sur le noeud A peuvent alors s'évacuer sur le conducteur de colonne.

La quantité de charges Q"3 injectée alors sur la colonne vers le circuit de lecture est

$$Q''3 = (Cs + Cdp)QD/(Cs + Cdp + Cdl)$$

Au total, la charge qui circule dans le conducteur de colonne pendant l'impulsion de ligne est Q3 = Q'3 + Q"3, c'est-à-dire, compte-tenu du fait que Cdl est très petite devant les autres capacités,

Q3 très peu différent de ( - Q1 + QD)

où QD est la charge utile générée dans la photodiode par l'éclairement.

Lorsque l'impulsion de lecture se termine sur la ligne Li, une charge Q'1 = +Q1 circule à nouveau dans le conducteur de colonne.

Si le circuit de lecture intègre le courant arrivant de l'instant t3 jusqu'après l'évacuation de la charge Q'1, la charge totale intégrée sera QD c'est-à-dire qu'elle correspondra bien au signal utile cherché.

On vérifie qu'à l'instant t'0 les conditions de potentiel sont bien les mêmes qu'à l'instant t0 : le potentiel du noeud A est bien égal à zéro ou plus précisément à la tension de seuil de conduction directe de la diode de lecture DL.

On peut remarquer que la diode de lecture DL doit être petite devant la photodiode pour que sa capacité soit négligeable, mais elle peut très bien être photosensible comme la photodiode DP: elle contribue alors sans inconvénient à la génération de photocharges. Pour la réalisation pratique il n'est donc pas nécessaire que la diode de lecture soit masquée par des couches opaques à la lumière.

La capacité globale d'une colonne Cj est sensiblement égale à N fois la capacité Cdl d'une diode de lecture DL s'il y a N points photosensibles rattachés à cette colonne. C'est évidemment beaucoup plus faible que si les photodiodes DP étaient directement connectées au conducteur de colonne pour servir de diodes de lecture.

Pendant la lecture d'une ligne, c'est-à-dire pendant l'impulsion de ligne émise sur cette ligne, le conducteur de colonne reçoit non seulement la charge utile Q3 correspondant à cette ligne, mais aussi éventuellement des fractions de charge Q1 et Q2 correspondant aux autres lignes; mais les explications qui précèdent montrent que les charges Q1 et Q2 sont proportionnelles à Cdl/(Cs+Cdp+Cdl); elles sont donc assez faibles.

Le courant d'obscurité (charges générées par les photodiodes en dehors de l'intervalle de temps t1, t2) est également transmis aux colonnes multiplié par ce même rapport; il ne perturbe donc pas trop la lecture d'une charge utile.

On remarquera enfin que la photodiode DP qui assure la photodétection ou l'essentiel de la photodétection reste toujours en polarisation inverse. Ceci limite les contraintes qu'elle subit et améliore la fiabilité du circuit.

Il est intéressant de constater que du fait que les diodes connectées au noeud A sont de même polarité, la réalisation technologique sera plus simple que s'il fallait connecter au même point à la fois une anode et une cathode de diode.

Plusieurs modes de fonctionnement sont possibles pour ce circuit.

Dans un premier mode de fonctionnement, l'éclairement se produit uniquement pendant un intervalle de temps t1, t2 entre deux impulsions de lecture. Le registre d'adressage de lignes (DEL) fonctionne de manière quasi-continue pour lire successivement toutes les lignes après une période d'éclairement commune à toutes les lignes: on éclaire; puis le registre balaye les lignes les unes après les autres pour les lire; puis on éclaire à nouveau, etc.

Dans un deuxième mode de fonctionnement, on peut envoyer sur toutes les lignes simultanément une impulsion de polarisation sur toutes les lignes Li, pour polariser tous les noeuds flottants A de la matrice; puis on envoie l'éclairement; puis on envoie les impulsions de lecture ligne par ligne.

Dans un troisième mode de réalisation, l'éclairement est continu, c'est-à-dire que d'une certaine manière t1 se confond avec t0 et t2 avec t'0.

Le temps nécessaire à la lecture des charges (c'est-à-dire le temps nécessaire à l'évacuation de la charge Q3) est d'autant plus important que la charge Q3 est plus faible, donc que l'éclairement reçu par le point photosensible sélectionné en lecture est plus faible.

Ceci provient de la résistance directe de la diode de lecture DL qui devient très importante au fur et à mesure que la différence de potentiel entre ses bornes, c'est-à-dire entre le noeud A et la colonne Cj, se rapproche de zéro.

Il faut donc prévoir une durée d'impulsion de lecture (t3 à t'0) suffisante pour tenir compte du cas le plus défavorable.

Une solution pour accélérer le transfert de charges consiste à rajouter au signal utile une charge supplémentaire de valeur connue produite par une source de lumière diffuse qui éclaire les points photosensibles; ainsi, même si l'éclairement utile est nul, un éclairement systématique sera produit et une charge non nulle sera transférée; il suffira de déduire une charge correspondante en sortie de l'intégrateur de lecture. On améliore ainsi la vitesse de lecture pour les faibles éclairements, en transférant une charge connue non nulle même pour un éclairement utile nul qui ne donnerait normalement pas lieu à un transfert de charges.

Dans le cas d'une matrice servant à la radiologie et recouverte d'un scintillateur convertissant les rayons X en rayons de lumière visible, on peut rajouter la source de lumière auxiliaire à l'arrière du panneau et éclairer à travers le substrat de la matrice; le substrat doit alors être transparent, ainsi que les conducteurs déposés sur le substrat et recouverts par les photodiodes.

Une autre solution consiste à augmenter la hauteur de l'impulsion de lecture : si VA1 est le niveau de référence de polarisation du noeud flottant avant l'éclairement, on a vu que VL1 - VL2 est en gros égal à -VA1 (en négligeant la chute de tension directe de la diode DL); on peut aussi prévoir que le niveau de l'impulsion de lecture est VL'1 - VL2 supérieur à -VA1 pour transférer même en cas d'éclairement nul une certaine quantité de charges correspondant à la différence entre VL'1 et VL1. Mais le potentiel du noeud A passe à la fin de cette impulsion à une valeur VA'1 et non VA1. Pour revenir ensuite aux mêmes conditions de polarisation du noeud flottant au départ de la lecture suivante, on apporte, par exemple par un flash de lumière, une quantité de charges au noeud A; puis on fait une lecture intermédiaire à blanc (sans qu'il y ait eu d'autre éclairement que ce flash) avec une impulsion de lecture de hauteur VL1-VL2 et non plus VL'1-VL2, ce qui fait revenir le potentiel du noeud A à sa valeur initiale normale.

L'apport de charges en vue de la lecture à blanc peut aussi se faire en polarisant l'une des diodes DP ou DL suffisamment en inverse pour qu'un courant de fuite non négligeable circule et provoque l'apport de charges désiré.

On notera que si cette méthode de lecture avec une étape intermédiaire de lecture à blanc est utilisée, alors l'éclairement utile doit être discontinu et non continu.

On peut faire encore les remarques suivantes : tout d'abord les tensions de ligne n'agissent que par influence capacitive; leur niveau absolu n'a donc pas d'importance; seule compte la différence VL1-VL2 et non la valeur absolue de VL2 ou VL1.

On peut donc choisir la tension de ligne au repos VL2 telle que la tension sur la capacité CS ne change jamais de signe au cours d'un cycle d'illumination et lecture. On peut alors utiliser comme capacité une diode polarisée en inverse. Deux possibilités existent : les potentiels VL1 et VL2 sont tels que la diode remplaçant la capacité CS ait comme électrode connectée au noeud flottant A une électrode de même nature que l'électrode des diodes DP et DL connectée au même point. Dans ce cas, cette diode peut être éclairée comme DP et DL et son courant photoélectrique s'ajoute à celui de DP et DL. Ou alors, les potentiels VL1 et VL2 sont choisis de sorte que la polarisation inverse constante de la diode remplaçant la capacité CS impose que l'électrode de cette diode connectée au noeud A soit une électrode différente des électrodes de DP et DL connectées au même point. Alors, il faut prendre soin que la diode remplaçant la capacité CS soit maintenue dans l'obscurité.

La diode photosensible DP peut être une diode PIN (superposition d'une couche semiconductrice de type P , d'une couche semiconductrice intrinsèque, et d'une couche de type N) ou une diode à cinq couches de type NIPIN ou PINIP avec deux couches intrinsèques dont l'une est très mince et l'autre plus épaisse. La sensibilité de détection de la lumière en est améliorée. Dans ce cas, la cathode de la photodiode est la couche N adjacente à la couche intrinsèque la plus épaisse et l'anode de la photodiode est la couche P adjacente à la couche intrinsèque la plus épaisse.

## Revendications

1. Matrice de points photosensibles comportant un réseau de points photosensibles (Pij) agencés en lignes (au moins une ligne) et en colonnes (au moins une colonne), chaque point photosensible étant situé au carrefour d'une ligne et d'une colonne, caractérisé en ce que chaque point photosensible comprend deux diodes (DP et DL) et une capacité (CS) reliées à un noeud flottant (A), la capacité étant reliée entre un conducteur de ligne (Li) et le noeud flottant, une première diode (DL), dite diode de lecture, connectée entre le noeud flottant commun et un conducteur de colonne (Cj) pour permettre le transfert entre ce conducteur de colonne et le noeud flottant d'une quantité de charges générées sur le noeud flottant par l'éclairement du point photosensible, et une deuxième diode (DP), dite diode photosensible, connectée entre le noeud flottant et une source de tension de polarisation (VR), pour engendrer lorsqu'elle est éclairée des charges électriques sur le noeud flottant, les diodes étant connectées avec la même polarité au noeud flottant.

2. Matrice selon la revendication 1, caractérisée en ce que la source de tension de polarisation (VR) a une valeur telle que la photodiode reste polarisée en inverse pendant tout le cycle de fonctionnement.

3. Matrice selon la revendication 2, caractérisée en ce que la source de tension de polarisation (VR) est une source de tension fixe.

4. Matrice selon l'une des revendications 1 à 3, caractérisée en ce qu'il est prévu un moyen pour porter les conducteurs de ligne à un premier potentiel de polarisation (VL2) pendant une phase d'éclairement et à un deuxième potentiel de référence (VL1) pendant une phase de lecture, et en ce que le premier et le second potentiel sont choisis tels que la tension aux bornes de la capacité conserve le même signe pendant toute la phase d'éclairement et la phase de lecture.

5. Matrice selon la revendication 4, caractérisé en ce que la capacité est réalisée sous forme d'une diode polarisée en inverse pendant la phase d'éclairement et la phase de lecture.

**Patentansprüche**

1. Matrix von lichtempfindlichen Punkten, bestehend aus einem Netz von lichtempfindlichen Punkten (Pij), die in Zeilen (mindestens eine Zeile) und Spalten (mindestens eine Spalte) angeordnet sind, wobei jeder lichtempfindliche Punkt am Schnittpunkt einer Zeile und einer Spalte liegt, dadurch gekennzeichnet, daß jeder lichtempfindliche Punkt zwei Dioden (DP und DL) sowie einen Kondensator (CS) enthält, die an einen Knoten (A) mit einem freischwebenden Potential angeschlossen sind, wobei der Kondensator zwischen einen Zeilenleiter (Li) und den Knoten (A), eine erste Diode (DL), Lesediode genannt, zwischen den gemeinsamen Knoten (A) und einen Spaltenleiter (Cj), um den Transfer einer an dem Knoten durch Beleuchtung des lichtempfindlichen Punkts erzeugten Ladungsmenge zwischen diesen Spaltenleiter und dem Knoten (A) zu erlauben, und eine zweite Diode (DP), lichtempfindliche Diode genannt, zwischen dem Knoten (A) und einer Sperr-Vorspannungsquelle (VR) angeschlossen sind, um bei Beleuchtung elektrische Ladungen auf dem Knoten (A) zu erzeugen, wobei die Dioden mit gleicher Polarität an diesen Knoten angeschlossen sind.

2. Matrix nach Anspruch 1, dadurch gekennzeichnet, daß die Vorspannungsquelle (VR) einen solchen Wert hat, daß die Fotodiode während des ganzen Betriebszyklus in Sperrichtung vorgespannt bleibt.

3. Matrix nach Anspruch 2, dadurch gekennzeichnet, daß die Vorspannungsquelle (VR) eine Festspannungsquelle ist.

4. Matrix nach einem der Ansprüche 1 bis 3, dadurch gekennzeichnet, daß ein Mittel vorgesehen ist, das die Zeilenleiter auf ein erstes Vorspannungspotential (VL2) während einer Beleuchtungsphase und auf ein zweites Bezugspotential (VL1) während einer Lesephase bringt, und daß das erste und das zweite Potential so gewählt sind, daß die Spannung an den Klemmen des Kondensators während der ganzen Beleuchtungsphase und während der Lesephase dasselbe Vorzeichen hat.

5. Matrix nach Anspruch 4, dadurch gekennzeichnet, daß der Kondensator als Diode ausgebildet ist, die während der Beleuchtungsphase und während der Lesephase in Sperrichtung vorgespannt ist.

**Claims**

1. Matrix of photosensitive points comprising a network of photosensitive points (Pij) arranged in lines (at least one line) and in columns (at least one column), each photosensitive point being situated at the intersection of a line and of a column, characterised in that each photosensitive point comprises two diodes (DP and DL) and a capacitor (CS) which are linked to a floating node (A), the capacitor being linked between a line conductor (Li) and the floating node, a first diode (DL), called read diode, being connected between the common floating node and a column conductor (Cj) for allowing the transfer between this column conductor and the floating node of a quantity of charges generated on the floating node by the illumination of the photosensitive point, and a second diode (DP), called photosensitive diode, connected between the floating node and a biasing voltage source (VR), in order to generate electric charges on the floating node when this diode is illuminated, the diodes being connected with the same polarity to the floating node.

2. Matrix according to Claim 1, characterised in that the biasing voltage source (VR) has a value such that the photodiode remains reverse-biased during the whole operating cycle.

3. Matrix according to Claim 2, characterised in that the biasing voltage source (VR) is a fixed voltage source.

4. Matrix according to one of Claims 1 to 3, characterised in that means are provided for bringing the line conductors to a first biasing voltage (VL2) during an illumination phase and to a second reference voltage (VL1) during a read phase, and in that the first and the second potentials are chosen such that the voltage at the terminals of the capacitor keeps the same sign during the whole illumination phase and the read phase.

5. Matrix according to Claim 4, characterised in that the capacitor is produced in the form of a reverse biased diode during the illumination phase and the read phase.

# FIG_1

EP 0 357 468 B1

# FIG_2

2a

2b

2c

2d

10